# NEW EUROPEAN PATENT SPECIFICATION

(11) **EP 1 622 308 B2**
(45) Date of publication and mention of the opposition decision: **18.12.2013**
(45) Mention of the grant of the patent: 04.03.2009
(21) Application number: 04727493.1
(22) Date of filing: 15.04.2004
(51) Int. Cl.: H04L 12/26

(54) **METHOD AND DEVICE OF PORT TEST OF BROAD BAND ACCESS DEVICE IN THE DIGITAL SUBSCRIBER BROAD BAND ACCESS SYSTEM**
VERFAHREN UND EINRICHTUNG ZUR PORTPRÜFUNG EINER BREITBANDZUGANGSEINRICHTUNG IN DEM DIGITALEN TEILNEHMER-BREITBANDZUGANGSSYSTEM
PROCEDE ET DISPOSITIF DE TEST D'ENTREE-SORTIE D'UN DISPOSITIF D'ACCES LARGE BANDE DANS LE SYSTEME D'ACCES LARGE BANDE D'ABONNE NUMERIQUE

(30) Priority: 15.04.2003 CN 03108973
(43) Date of publication of application: 01.02.2006
(73) Proprietor: Huawei Technologies Co., Ltd., Shenzhen, Guangdong Province 518129 (CN)
(72) Inventor: ZHOU, Jun Huawei Administration Building, Guangdong 518129 (CN)
(74) Representative: Körber, Martin Hans
(86) International application number: PCT/CN2004/000358
(87) International publication number: WO 2004/093385

(56) References cited:
- WO-A1-02/091721
- US-A- 5 787 114
- US-A1- 2001 016 929
- US-A1- 2002 169 585
- US-A1- 2002 176 542
- US-B1- 6 201 829
- US-B1- 6 477 238

## Description

### Field of the Technology

The present invention relates generally to techniques of testing digital subscriber line (DSL) broadband service in a broadband digital subscriber access system, particularly to a method for testing port of a broadband access device in a broadband digital subscriber access system and the apparatus thereof.

### Background of the Invention

In the field of telecommunications, an operator is able to provide a subscriber with both broadband and narrow-band telecommunication services via a twisted pair simultaneously, e.g. ADSL (Asymmetric Digital Subscriber Line) over POTS (Plain Ordinary Telephone Service), ADSL over ISDN (Integrated Service Digital Network), VDSL (Very High Digital Subscriber Line) over POTS, VDSL over ISDN, and G.SHDSL (Single-pair High-speed Digital Subscriber Line). Such applications have become quite common in the field. In this invention, ADSL, VDSL, and G.SHDSL are referred to as xDSL.

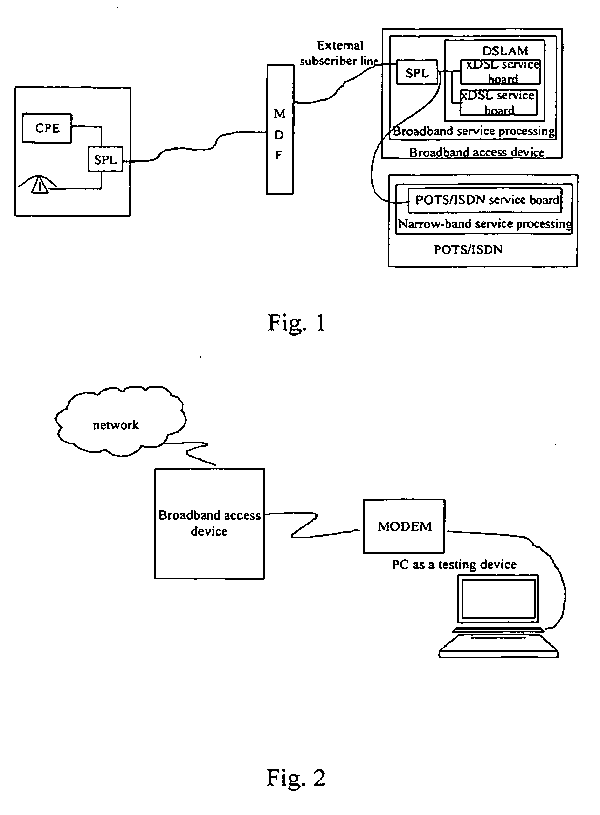

As shown in Figure 1, xDSL signals and POST/ISDN signals co-exist in one external subscriber line. At the side of Central Office (CO), a Splitter (SPL) in a broadband access device, such as a DSL Access Multiplexer (DSLAM), separates broadband service and narrow-band service transferred from a main distribution frame (MDF) and distributes them to broadband (xDSL) service board and narrow-band (POTS/ISDN) service board for processing, respectively. At the side of Customer Premises Equipment (CPE), on the other hand, SPL in CPE separates the broadband and narrow-band services from the MDF and transfers them to a xDSL Modem and a phone set, respectively.

When performing an xDSL service, the xDSL service board at CO side and the xDSL Modem at the CPE side will firstly initiate a hand-shake process and establish a connection before transferring digital data.

When there is a failure in the broadband access device, how to locate the failure quickly, effectively, and accurately, especially how to decide quickly and accurately whether the xDSL service board works normally, has become an issue with a significant impact on the cost of operation and maintenance as well as on the quality of service of the operator.

Document US 6 201 829 B1 discloses a pseudo-random built in self-test pattern system, which is able to generate at least 255 out of 256 patterns representing valid transmission characters, so that a high speed circuit can be evaluated at its operational 1.06 GHz speed. Herefore the system comprises a transmitter input coupled to a built-in self-test (BIST) circuit and to a transmitter bus. For testing a MODE signal is selected by the transmitter input, BIST circuit then outputs a sequence of 10-bit parallel data at a 106.25 MHz rate, which is serialized into a 1.06 GHz serial data section from the transceiver's output buffer via a transmission line, where it is deserialized and provides a 10-bit parallel data to the signature analyzer.

Document US 2002/0169585 A1 reveals an adaptive method and system for transmission line analysis and discloses a method for performing time domain reflectometry to determine the location of line anomalies in a communication channel. When a transmit module and a receive module are connected by a line interface to a communication channel, said line interface may comprise components that create some mismatch and hence create a reflection during operation of the sequence time domain signal over a channel. The system receives on or more reflection signals, and performs reflection signal processing on the reflection. Herefore, the reflection signal may be correlated with the original sequence.

Document US 2002/0176542 A1 discloses a method for performing either tone analysis on a local looped back communication path or utilizing a hybrid reflection based looped-back test to test the integrity of the communication channel. Therefore, a test tone is placed in an outbound path of a full-duplex transmission system. The echo cancellation capability is disabled, enabling an echo signal of the test tone to pass through the inbound path of the full-duplex transmission system, which echo signal is analyzed to determine the condition of the full-duplex paths.

Document US 5,787,114 discloses a loop back test system and method for providing local fault detection within the core or macrocell of an integrated I/O interface device on an integrated circuit. The loop back of input test data from the transmitters output directly to the receiver's input permits fault detection within the core of an integrated I/O interface.

As shown in Figure 2, a modem is at present often used to find out failures in a port of a broadband access device. The modem is coupled with a port of a broadband access device, and then the operation parameters thereof are observed and utilized to determine whether the port in the broadband access device is normal. After that, perform internet access via the modem or send a ping packet to decide whether the xDSL board in the broadband access device is normal. However, this technique has the following drawbacks:
1. The cost is high and the testing steps are complicated. Modems and computers are needed to locate the failure of the broadband access device, and output of the port of the tested broadband access device has to be led to a testing computer via a modem at MDF of CO side. If there is no testing computer, personnel are required to cooperate at the modem to read out the data; or even there is no way of making measurement to determine whether the bit error rate of the data path is normal. Meanwhile the functional test equipment used in manufacture line is unwieldy as many modems and computers have to be involved.
2. As the test is performed at the near end and that means no loop is inserted between CO and xDSL modem, test result may not be accurate. In particular, the test result can not show the performance in loop, nor can it give an actual disclosure of the degrade of analog circuit of the port in broadband access devices.
3. The test result may depend on the interoperability between broadband access devices and modems which are provided by various vendors as well as the performance of the modems themselves. In terms of the functional testing equipment in the manufacture line, as the modems have to be activated and deactivated frequently, the usability of the testing equipment is subject to the stability of the modems.
4. When the broadband access device operates in a network, personnel are needed in the premise of the DSLAM to troubleshoot it.

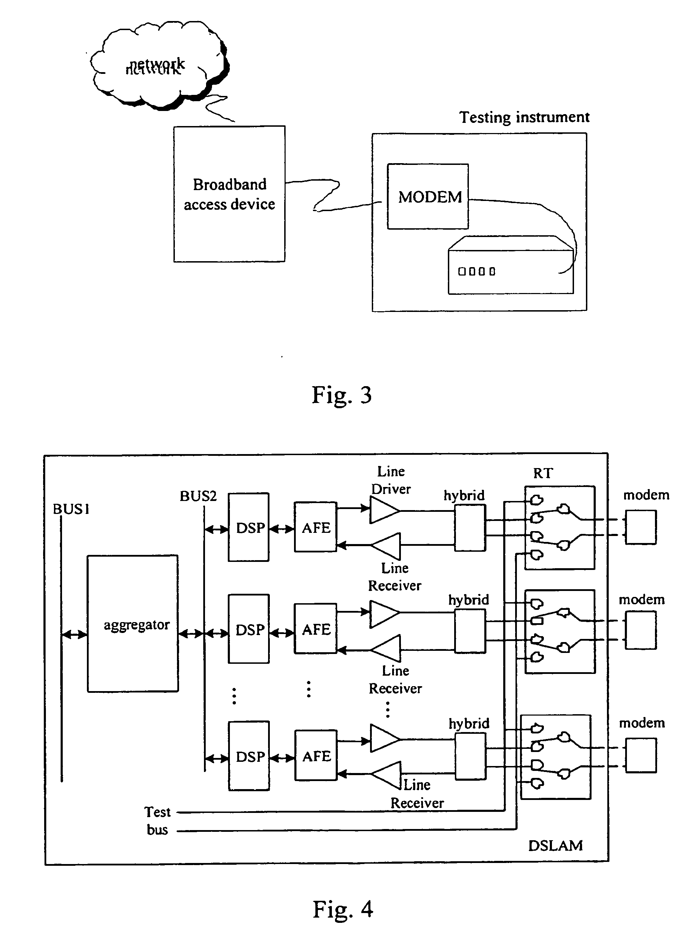

There is another test method at present, as shown in Figure 3, where a portable testing instrument is used. For instance, a portable xDSL testing instrument can be used for the above-mentioned test of a broadband access device at the MDF; or a special testing instrument for analog signals, such as a spectrum analyzer, may be used for testing the port of a broadband access device. However, since a modem chip is built in such a portable testing instrument, this test method has all the drawbacks of the previous solution, and spectrum analyzer is too expensive to be used in functional test in mass production.

### Summary of the Invention

In view of the above, the primary object of this invention is to provide a method for port test of a broadband access device in a digital subscriber broadband access system. According to this invention, internal test of a port of a broadband access device can be accomplished without an external testing equipment or increasing of maintenance personnel.

Another object of the present invention is to provide an apparatus for port test of a broadband access device in a digital subscriber access system, which is able to accomplish internal measurement of a port of a broadband access device without external testing equipment or increasing of maintenance personnel.

To achieve the above objects, the technical solution in accordance with this invention is implemented as follows:
A method for self-testing a port of a broadband access device in a digital subscriber line (DSL) broadband access system, comprises,
A. transmitting a signal over a downstream channel of the port of the broadband access device in Central Office (CO) equipment, making the signal reflected at an output of the port;
B. receiving and processing the reflected signal over an upstream channel of the port, and obtaining characteristic parameters of the reflected signal; evaluating the port according to the characteristic parameters.

Wherein the step of making the signal reflected at the output end of the port comprises, making the output impedance of the port of the broadband access device mismatch.

Wherein the step of making the output impedance of the port of the broadband access device mismatch comprises:
making the output of the port of the broadband access device disconnected;
or making the output of the port of the broadband access device short-circuited;
or connecting the output of the port of the broadband access device to a load having a predefined resistance.

The test method further comprises:
measuring a reflected signal of the port of the broadband access device under a normal output impedance; and,
before the processing in step B, further comprises, subtracting the reflected signal under the normal output impedance from the reflected signal received in step B to obtain an accurate reflected signal for processing.

Wherein the measuring a reflected signal of the port of the broadband access device under a normal output impedance comprises, connecting the output end of the port of the broadband access device with a calibrating device.

Wherein the calibrating device is configured with at least a calibrating relay and a calibrating impedance and the calibrating relay connects the calibrating impedance to the output end of the port of the broadband access device.

Wherein the signal transmitted in step A comprises signals in the frequency bands of both the upstream and downstream channels of the port of the broadband access device, or
signals in the frequency band of the upstream channel of the port of the broadband access device; or
signals in the frequency bands of the downstream channel of the port of the broadband access device.

Wherein the PRBS is generated by a digital signal processor (DSP) in the port of the broadband access device;
or generated by a network management system and scrambled by the DSP in the port of the broadband access device.

Wherein the processing the reflected signals and obtaining the characteristic parameters of the reflected signal in step B comprises:
B1.amplifying, by the upstream channel of the port of the broadband access device, the reflected signal and converting the reflect analog signal to digital version to obtain a digitized version of the reflected signal;
B2. making Discrete Fourier Transform for the digitized version of the reflected signal and obtaining the characteristic parameters of the reflected signal by demodulation;
the evaluating the port according to the characteristic parameters comprises:
B3. comparing the characteristic parameters with the parameters of the transmitted signal to obtain characters of the port of the broadband access device such as SNR, and determining in accordance with the characteristic parameters whether components in the port of the broadband access device are normal.

An apparatus for port test of a DSL broadband access system includes, a digital signal processor, adapted to generate a digital signal and send the digital signal to an Analog Front End, AFE, and to receive a digitized version of a reflected signal from the AFE, process the digitized version of the reflected signal, and obtain characteristic parameters of the digitized version of the reflected signal, evaluate the port according to the characteristic parameters;
the AFE, adapted to convert the digital signal received from the digital signal processor into an analog signal and send the analog signal to a line driver, and to receive a reflected analog signal from a line receiver, convert the reflected analog signal into the digital version and send the digital version to the digital signal processor;
the line driver, adapted to amplify the analog signal received from the AFE and send the amplified analog signal to an output of the port through a hybrid circuit, and
the line receiver, adapted to receive the reflected analog signal from the output of the port through the hybrid circuit and send the reflected analog signal to the AFE.

Wherein an output impedance of the DSLAM port is mismatch.

The test apparatus further comprises a calibrating device, which consists at least of a calibrating relay and a calibrating impedance, and the calibrating relay connects the calibrating impedance to the tested port via a set of contacts of the calibrating relay.

To sum up, the method provided by this invention makes the output impedance of a port of a broadband access device mismatch while the port receives the reflected version of signal transmit by the port, amplifies the reflected signals, and obtains the characteristics thereof by analysis so as to acquire the test result of the port of the broadband access device. Accordingly, in accordance with this invention, internal measurement of a port of a broadband access device can be accomplished without an external testing equipment or assigning maintenance personnel to site. Furthermore, in accordance with this invention, calibration of the signals reflected by a port of a broadband access device can be conducted such that test results can be obtained based on the calibrated reflected signals, thereby improving the accuracy of the internal measurement in accordance with this invention of the port of the broadband access device.

### Brief Description of the Drawings

Figure 1 shows a digital subscriber broadband access system constituted by CO and CPE.
Figure 2 shows an prior system architecture for testing a CO port.
Figure 3 shows another prior system architecture for testing a CO port.
Figure 4 is the principle diagram of DSLAM.
Figure 5 shows the signal transfer in a path of a DSLAM port when making a test in accordance with the embodiment of this invention.
Figure 6 shows the connecting relation and signal transfer of a DSLAM port when making calibration in accordance with the embodiment of this invention.

### Embodiments of the Invention

The present invention is hereinafter described in detail with reference to the accompanying drawings.

With mismatching impedance at output of a hybrid, an output signal of the hybrid will be reflected at the impedance discontinuous point, for example, a reflected version of the output signal will be produced at the output of a hybrid. Since a digital subscriber broadband access system is a hybrid system, when the output impedance of a port of a broadband access device is made mismatch, in accordance with this invention, the port can receive a reflected version of the self-output signal, make amplification of the reflected signal and obtain the characteristics thereof by analysis so as to acquire the test result of the port of the broadband access device through a self-test mode.

As a broadband access device consists of DSLAM and Splitter (SPL), and SPL is a low-pass element, impact of SPL on the test of a port of a broadband access device is negligible when making such a test. That is, testing a port of a broadband access device actually means testing a DSLAM port. Therefore, this invention is described below by taking the test of a DSLAM port as an example.

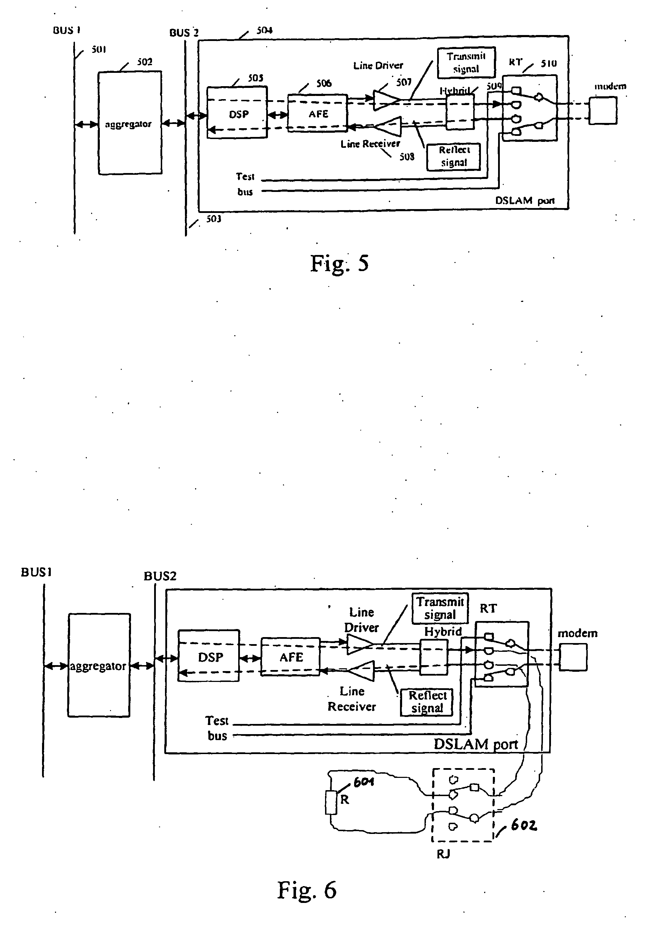

Figure 4 is the functional diagram of DSLAM. As shown in Figure 4, DSLAM consists of the aggregator, the backbone bus i.e. BUS1, the in-board bus, i.e. BUS2, and at least one DSLAM port. The digital subscriber broadband access system manages the DSLAM via BUS1 while the aggregator is set between BUS1 and BUS2 for use in aggregating xDSL data of multiple paths to BUS1 as well as distributing the data flow from BUS1 to appropriate DSLAM ports. As shown in Figure 5, one DSLAM port consists at least of a digital signal processor (DSP), an analog front end (AFE), a Line Driver, a Line Receiver or a receiver built-in the AFE, a hybrid and a relay tester (RT), where the RT for use in connecting to a modem that is connected with the hybrid, Line Driver and Line Receiver are serially connected between AFE and the hybrid, respectively, and DSP is serially connected between AFE and BUS2. The DSLAM port is used to receive the control signal of the aggregator from BUS2, convert the control signal into an analog output signal, and give it through the hybrid to CPE.

In order to make the impedance of the DSLAM port mismatch, the DSLAM port is disconnected from the loop, or short-circuited, or connected with a load.

The following is a description of how to test a DSLAM port when the impedance of the port is mismatch.

Since a DSLAM is under the control of the network management of the digital subscriber broadband access system, after the network management issues a test command for this DSLAM port, the port will enter test mode, execute the test program, and transmit downstream signals to the external subscriber line. The downstream signal is such one of which comprises both upstream and downstream frequency band, for instance, all the tones are transmitted, tones 6~31 in upstream and 32-255 in downstream, for a DSLAM adopting an ADSL board. Similarly, for VDSL modulated with Discrete Multi-Tone (DMT), all the tones used are also sent.

In the upstream channel of the DSLAM port, the reflected version of the downstream signal is received by Line Receiver and amplified there. Then the amplified analog signal is digitized by AFE before it is sent for processing in DSP, in which parameters of the reflected signal, such as amplitude and frequency, will be obtained by analyzing digitized version of the reflect signal.

In accordance with this invention, the part of downstream signal can be modulated with PRBS (pseudorandom binary sequence) at the DSLAM port, that is, PRBS is carried be tone 6~31. The PRBS can be generated by the DSP itself in the DSLAM port, or by network management system, and scrambled by the DSP; in any case, these data are used as the modulated testing data.

In the upstream channel of the DSLAM port, when Line Receiver receives the reflected version of the testing data modulated by PRBS, the reflected signal will be amplified at Line Receiver, converted from analog to digital at AFE, and transferred to DSP for processing. DSP will then obtain the demodulated testing data of the reflected signal.

In accordance with this invention, on one hand, parameters such as amplitudes and frequencies of the reflected signal and the transmitted signal corresponding to the reflected signal can be compared based on the parameters and testing data obtained, thereby obtaining the SNR of the reflected signal and the downstream signal of the DSLAM port, that is, the SNR of the upstream channel and the downstream channel of the DSLAM port; on the other hand, the demodulated testing data can be compared with the modulated testing data and bit error rate is calculated, thereby determining whether the hybrid, Line driver, Line receiver, AFE, and DSP of each channel in the DSLAM port are normal.

When the above described method is implemented, signals are transmitted directly to the outside from a DSLAM with ADSL, or a DSLAM with VDSL, or a DSLAM with SHDSL, or a hybrid fiber co-axial (HFC) port with co-axial cable, and the output impedance of the port is made mismatch, in order to make the transmitted signals reflected at the port. Correspondingly, the reflected signals are received by the upstream channel of the same port. Then, after appropriate processing and analysis of the reflected signals, it can be decided whether the DSLAM port with ADSL, VDSL, or SHDSL, or the HFC port is normal.

When the above described method is implemented, PRBS may be produced in the DSP of a DSLAM with ADSL, or with VDSL, or with SHDSL, or in the DSP of an HFC port and then signals are modulated with PRBS. Then the modulated signals are sent to the output of the DSLAM port or HFC port while the RT of the port operates to disconnect the output of the port, making the port disconnected, and accordingly, making the output impedance thereof mismatch so that there will be the reflected version of the transmitted signals at the disconnected port. Correspondingly, the reflected signals are received in the upstream channel of the same port. Then, after appropriate processing and analysis of the reflected signals, it can be decided whether the DSLAM port with ADSL, VDSL, or SHDSL, or the HFC port is normal.

When the above-said method is implemented, PRBS may also be produced in the network management of the digital subscriber broadband service system that administers the DSLAM or HFC. Then the signals are modulated with the PRBS in the DSLAM with ADSL, VDSL, or SHDSL, or in the HFC port with co-axial cable before being transmitted to the output end of the DSLAM or HFC port while the RT of the port operates to disconnect the output of the port, making the port disconnected, and accordingly, making the output impedance thereof mismatch so that there will be at the output the reflected version of the transmitted signals. Correspondingly, the reflected signals are received in the upstream channel of the same port. Then, after appropriate processing and analysis of the reflected signals, it can be decided whether the DSLAM port with ADSL, VDSL, or SHDSL, or the HFC port is normal.

Referring to Figure 6, a DSLAM with ADSL is herein taken as an example. In order to improve the accuracy of the test, a calibrating relay RJ may as well be connected to the DSLAM port under testing while RJ connects the port to an external standard load of resistor R of 100Ω for calibration.

Similarly, the calibration circuit corresponding to DSLAM with VDSL or SHDSL, or corresponding to HFC port with co-axial cable has the same structure as the above described calibration circuit except that the resistance of the resistor R used is different. Typically, the resistance of this resistor R equals to the resistance of the device that is connected with the tested DSLAM or HFC port before the output impedance thereof is mismatch, for instance, the modem. This is because there also exist at the tested port reflected signals when the port is connected with a normal load, for instance, a modem. The purpose of this calibrating resistor R, therefore, is to obtain and record the normal reflected signals through R. When a test of the port is carried out, accurate reflected signals can be obtained by subtracting the pre-recorded normal reflected signals from the reflected signals actually tested. In this way, parameters of the obtained reflected signals, such as amplitude, frequency, and phase thereof, will give a genuine test result of the DSLAM or HFC port.

In this invention, it is also possible not to make the impedance of the DSLAM or HFC port mismatch but to directly receive the reflected version of the downstream signals transmitted from the DSLAM or HFC port. However, the amplitude of that reflected version of the signals is not high.

The technical solution described above has the following beneficial effects:
1. The scope of test is wide. If the testing data are sent from the network management, the all paths within the DSLAM can be tested; if PRBS is sent from the DSP of the DSLAM itself, the downstream channel of DSP, AFE, Line driver, and hybrid as well as the upstream channel of Line receiver, AFE, and DSP can be tested. Meanwhile it is possible to calculate the bit error rate in accordance with the prior art.
2. The cost of test is low. The solution is completely based on the existing hardware. There is no need of incorporating any external devices except for performing the testing software. Compared with solutions in the prior art, this method has an obvious advantage in terms of cost.
3. The operation of test is simple. Compared with the prior art, this solution can accomplish the test by only a command. There is no need of assigning personnel to the location of DSLAM, thus reduces maintenance expense.
4. The test is highly reliable. As modem is not required, the test result is no longer depending on the interoperability between CO and modems or the reliability of the modems themselves.

It should be appreciated that the description above is only preferred embodiments of this invention and accordingly, to be regarded in an illustrative rather than restrictive sense.

## Claims

1. A method for self-testing a port of a broadband access device in a digital subscriber line broadband access system, **characterized by**:
A. transmitting a signal over a downstream channel of the port of the broadband access device in Central Office equipment, making the signal reflected at an output of a hybrid of the port, wherein the signal transmitted in step A comprises signals in the frequency bands of both upstream and downstream channels of the port of the broadband access device;
B. receiving and processing the reflected signal over an upstream channel of the port, and obtaining characteristic parameters of the reflected signal by analysis; evaluating the port by deciding according to the characteristic parameters whether the port is normal.

2. A method according to Claim 1, wherein the step of making the signal reflected at the output of the port comprises, making the output impedance of the port of the broadband access device mismatch.

3. A method according to Claim 2, wherein the step of making the output impedance of the port of the broadband access device mismatch comprises:
making the output of the port of the broadband access device disconnected;
or making the output of the port of the broadband access device short-circuited;
or connecting the output of the port of the broadband access device to a load having a predefined resistance.

4. A method according to Claim 1, further comprising:
measuring a reflected signal of the port of the broadband access device under a normal output impedance; and,
before the processing in step B, further comprising, subtracting the reflected signal under the normal output impedance from the reflected signal received in step B to obtain an accurate reflected signal for processing.

5. A method according to Claim 1, wherein the measuring a reflected signal of the port of the broadband access device under a normal output impedance comprises, connecting the output of the port of the broadband access device with a calibrating device.

6. A method according to Claim 5, wherein the calibrating device is configured with at least a calibrating relay and a calibrating impedance connecting to the port via a calibrating relay.

7. A method according to Claim 1, wherein the signal transmitted in step A is modulated by the port of the broadband access device with a pseudo random binary sequence, PRBS,
wherein the PRBS is generated by a digital signal processor in the port of the broadband access device;
or generated by a network management system and scrambled by the digital signal processor in the port of the broadband access device.

8. A method according to Claim 1, wherein the processing the reflected signals and obtaining the characteristic parameters of the reflected signal in step B comprises:
B1. amplifying, by the upstream channel of the port of the broadband access device, the reflected signal and converting the reflect analog signal to digital version to obtain a digitized version of the reflected signal;
B2. making Discrete Fourier Transform for the digitized version of the reflected signal and obtaining the characteristic parameters of the reflected signal by demodulation;
the evaluating the port according to the characteristic parameters comprises:
B3. comparing the characteristic parameters with the parameters of the transmitted signal to obtain SNR of the port of the broadband access device, and determining in accordance with the characteristic parameters whether components in the port of the broadband access device are normal.

9. An apparatus for port test of a broadband access device in a digital subscriber line, DSL, broadband access system, **characterized by**:
the apparatus comprising a port which comprises:
a hybrid circuit(509);
a digital signal processor(505), adapted to generate a digital signal and send the digital signal to an Analog Front End, AFE(506), and to receive a digitized version of a reflected signal from the AFE(506), process the digitized version of the reflected signal, and obtain characteristic parameters of the digitized version of the reflected signal by analyzing the digitized version of the reflect signal, evaluate the port by deciding according to the characteristic parameters whether the port is normal;
the AFE(506), adapted to convert the digital signal received from the digital signal processor(505) into an analog signal and send the analog signal to a line driver(507), and to receive a reflected analog signal from a line receiver(508), convert the reflected analog signal into the digitized version and send the digitized version to the digital signal processor(505);
the line driver(507), adapted to amplify the analog signal received from the AFE(506) and send the amplified analog signal to an output of the port through the hybrid circuit(509), and
the line receiver(508), adapted to receive the reflected analog signal from the output of the port through the hybrid circuit(509) and send the reflected analog signal to the AFE(506);
wherein the reflected analog signal received by the line receiver(508) is a reflected version of a downstream signal, and the downstream signal comprises signals in the frequency bands of both upstream and downstream channels of the port of the broadband access device.

10. An apparatus according to Claim 9, wherein an output impedance of the port is mismatch.

11. An apparatus according to Claim 9, further comprising a calibrating device, which consists at least of a calibrating impedance (601) connecting to the output of the port via a calibrating relay (602) while testing.

## Patentansprüche

1. Verfahren zur Selbstüberprüfung eines Ports einer Breitbandzugangsvorrichtung in einem digitalen Teilnehmerleitungs-Breitbandzugangssystem, **gekennzeichnet durch**:
A. Übertragen eines Signals über einen Downstream-Kanal des Ports der Breitbandzugangsvorrichtung in der Amtsausrüstung, wobei bewirkt wird, dass das Signal an einem Ausgang eines Hybrids des Ports reflektiert wird, wobei das in Schritt A übertragene Signal Signale der Frequenzbänder sowohl des Upstream-Kanals als auch des Downstream-Kanals des Ports der Breitbandzugangsvorrichtung umfasst;
B. Empfangen und Verarbeiten des reflektierten Signals über einen Upstream-Kanal des Ports, und Erhalten charakteristischer Parameter des reflektierten Signals **durch** Analyse; Evaluieren des Ports **durch** Entscheiden gemäß den charakteristischen Parametern, ob der Port normal ist.

2. Verfahren nach Anspruch 1, wobei der Schritt des Bewirkens, dass das Signal an dem Ausgang des Ports reflektiert wird, umfasst, dass bewirkt wird, dass die Ausgangsimpedanz des Ports der Breitbandzugangsvorrichtung fehlangepasst wird.

3. Verfahren nach Anspruch 2, wobei der Schritt des Bewirkens, dass die Ausgangsimpedanz des Ports der Breitbandzugangsvorrichtung fehlangepasst wird, umfasst:
Bewirken, dass der Ausgang des Ports der Breitbandzugangsvorrichtung abgekoppelt wird; oder Bewirken, dass der Ausgang des Ports der Breitbandzugangsvorrichtung kurzgeschlossen wird; oder Verbinden des Ausgangsports der Breitbandzugangsvorrichtung mit einer Last, die einen vorgegebenen Widerstand hat.

4. Verfahren nach Anspruch 1, ferner umfassend:
Messen eines reflektierten Signals des Ports der Breitbandzugangsvorrichtung unter einer normalen Ausgangsimpedanz; und
vor der Verarbeitung in Schritt B, ferner umfassend das Subtrahieren des reflektierten Signals unter der normalen Ausgangsimpedanz von dem reflektierten Signal, das in Schritt B empfangen wurde, um ein exakt reflektiertes Signal zur Verarbeitung zu erhalten.

5. Verfahren nach Anspruch 1, wobei das Messen eines reflektierten Signals des Ports der Breitbandzugangsvorrichtung unter einer normalen Ausgangsimpedanz das Verbinden des Ausgangsports der Breitbandzugangsvorrichtung mit einer Kalibriervorrichtung umfasst.

6. Verfahren nach Anspruch 5, wobei die Kalibriervorrichtung mit zumindest einem Kalibrierrelais und einer Kalibrierimpedanz, die mit dem Port über ein Kalibrierrelais verbunden ist, konfiguriert ist.

7. Verfahren nach Anspruch 1, wobei das in Schritt A übertragene Signal durch den Port der Breitbandzugangsvorrichtung mit einer "Pseudo Random Binary Sequence", PRBS, moduliert wird, wobei die PRBS mittels eines digitalen Signalprozessors in dem Port der Breitbandzugangsvorrichtung erzeugt wird; oder durch ein Netzwerkmanagement-System erzeugt und mittels des digitalen Signalprozessors in dem Port der Breitbandzugangsvorrichtung verwürfelt wird.

8. Verfahren nach Anspruch 1, wobei das Verarbeiten des reflektierten Signals und das Erhalten der charakteristischen Parameter des reflektierten Signals in Schritt B umfasst:
B1. Verstärken des reflektierten Signals mittels des Upstream-Kanals des Ports der Breitbandzugangsvorrichtung und Konvertieren des reflektierten Analogsignals in eine Digitalversion um eine digitalisierte Version des reflektierten Signals zu erhalten;
B2. Erzeugen einer diskreten Fourier-Transformation für die digitalisierte Version des reflektierten Signals und Erhalten der charakteristischen Parameter des reflektierten Signals durch Demodulation;
wobei das Evaluieren des Ports gemäß der charakteristischen Parameter umfasst:
B3. Vergleichen der charakteristischen Parameter mit den Parametern des übertragenen Signals, um SNR des Ports der Breitbandzugangsvorrichtung zu erhalten, und in Übereinstimmung mit den charakteristischen Parametern Bestimmen, ob Komponenten in dem Port der Breitbandzugangsvorrichtung normal sind.

9. Vorrichtung zur Port-Überprüfung einer Breitbandzugangsvorrichtung in einem digitalen Teilnehmerleitungs-Breitbandzugangssystem, DSL-Breitbandzugangssystem, **gekennzeichnet durch**:
die Vorrichtung umfassend einen Port, der umfasst:
einen Hybridkreislauf (509);
einen digitalen Signalprozessor (505), der geeignet ist, um ein digitales Signal zu generieren und das digitale Signal an ein analoges Front End, AFE (506), zu senden und um eine digitalisierte Version eines reflektierten Signals von dem AFE (506) zu empfangen, die digitalisierte Version des reflektierten Signals zu verarbeiten und
charakteristische Parameter der digitalisierten Version des reflektierten Signals **durch** Analysieren der digitalisierten Version des reflektierten Signals zu erhalten, den Port durch Entscheiden entsprechend den charakteristischen Parametern zu evaluieren, ob der Port normal ist;
das AFE (506), das geeignet ist, um das digitale Signal, das von dem digitalen Signalprozessor (505) empfangen wurde, in ein Analog-Signal zu konvertieren und das Analog-Signal an einen Leitungstreiber (507) zu senden, und ein reflektiertes Analog-Signal von einem Leitungsempfänger (508) zu empfangen, das reflektierte Analog-Signal in die digitalisierte Version zu konvertieren und die digitalisierte Version an den digitalen Signalprozessor (505) zu senden;
den Leitungstreiber (507), der geeignet ist, um das Analog-Signal zu verstärken, das von dem AFE (506) empfangen worden ist und das verstärkte Analog-Signal an einen Ausgang des Ports mittels eines Hybridkreislaufs (509) zu senden, und
den Leitungsempfänger (508), der geeignet ist, um das reflektierte Analog-Signal von dem Ausgang des Ports **durch** den Hybridkreislauf (509) zu empfangen und das reflektierte Analog-Signal zu dem AFE (506) zu senden;
wobei das reflektierte Analogsignal, das von dem Leitungsempfänger (508) empfangen wird, eine reflektierte Version eines Downstream-Signals ist, und das Downstream-Signal Signale in den Frequenzbändern sowohl des Upstream-Kanals als auch des Downstream-Kanals des Ports der Breitbandzugangsvorrichtung umfasst.

10. Vorrichtung nach Anspruch 9, wobei die Ausgangsimpedanz des Ports fehlangepasst ist.

11. Vorrichtung nach Anspruch 9, die ferner eine Kalibriervorrichtung umfasst, welche aus zumindest einer Kalibrierimpedanz (601) besteht, die den Ausgang des Ports über ein Kalibrierrelais (602) während der Untersuchung verbindet.

## Revendications

1. Procédé d'auto-surveillance d'un accès d'un dispositif d'accès large bande dans un système d'accès numérique large bande de ligne d'abonné, **caractérisé par**:
A. transmettre un signal sur un canal aval de l'accès du dispositif d'accès large bande dans un équipement d'Office Central, amener le signal à être réfléchi à une sortie d'un hybride de l'accès le signal transmis à l'étape A comprenant des signaux dans les bandes de fréquence à la fois des canaux amont et aval de l'accès du dispositif d'accès large bande;
B. recevoir et traiter le signal réfléchi sur un canal amont de l'accès et obtenir des paramètres caractéristiques du signal réfléchi par analyse; évaluer l'accès en déterminant en accord avec les paramètres caractéristiques si l'accès est normal.

2. Procédé selon la revendication 1, où l'étape consistant à amener le signal à être réfléchi à la sortie de l'accès comprend la désadaptation de l'impédance de sortie de l'accès du dispositif d'accès large bande.

3. Procédé selon la revendication 2, où l'étape consistant à désadapter l'impédance de sortie de l'accès du dispositif d'accès large bande comprend:
amener la sortie de l'accès du dispositif d'accès large bande à être déconnectée;
ou amener la sortie de l'accès du dispositif d'accès large bande à être court-circuitée;
ou connecter la sortie de l'accès du dispositif d'accès large bande à une charge ayant une résistance prédéfinie.

4. Procédé selon la revendication 1, comprenant en outre:
mesurer un signal réfléchi de l'accès du dispositif d'accès large bande sous une impédance de sortie normale; et
avant le traitement à l'étape B, comprenant en outre la soustraction du signal réfléchi sous l'impédance de sortie normale du signal réfléchi reçu à l'étape B pour obtenir un signal réfléchi précis pour le traitement.

5. Procédé selon la revendication 1, où la mesure d'un signal réfléchi de l'accès du dispositif d'accès large bande sous une impédance de sortie normale comprend la connexion de la sortie de l'accès du dispositif d'accès large bande à un dispositif de calibrage.

6. Procédé selon la revendication 5, où le dispositif de calibrage est configuré avec au moins un relais de calibrage et une impédance de calibrage reliée à l'accès par un relais de calibrage.

7. Procédé selon la revendication 1, où le signal transmis à l'étape A est modulé, par l'accès du dispositif d'accès large bande avec une pseudo séquence binaire aléatoire, PRBS,
où le PRBS est produit par un processeur de signaux numériques dans l'accès du dispositif d'accès large bande;
ou produit par un système de gestion de réseau et brouillé par le processeur de signaux numériques dans l'accès du dispositif d'accès large bande.

8. Procédé selon la revendication 1, où le traitement des signaux réfléchis et l'obtention des paramètres caractéristiques du signal réfléchi à l'étape B comprend:
B1. amplifier, par le canal amont de l'accès du dispositif d'accès large bande, le signal réfléchi et convertir le signal analogique réfléchi en version numérique pour obtenir une version numérisée du signal réfléchi;
B2. effectuer la transformation discrète de Fourier pour la version numérisée du signal réfléchi et obtenir les paramètres caractéristiques du signal réfléchi par démodulation;
l'évaluation de l'accès selon les paramètres caractéristiques comprend:
B3. comparer les paramètres caractéristiques avec les paramètres du signal transmis pour obtenir SNR de l'accès du dispositif d'accès large bande, et déterminer en accord avec les paramètres caractéristiques si les composants dans l'accès du dispositif d'accès large bande sont normaux.

9. Appareil de test d'accès d'un dispositif d'accès large bande dans un système d'accès large bande de ligne d'abonné numérique, DSL, **caractérisé par**:
l'appareil comprenant un accès qui comprend:
un circuit hybride (509);
un processeur de signaux numériques (505), apte à produire un signal numérique et à transmettre le signal numérique à une extrémité frontale analogique, AFE (506) et à recevoir une version numérisée d'un signal réfléchi de l'AFE (506), traiter la version numérisée du signal réfléchi et obtenir des paramètres caractéristiques de la version numérisée du signal réfléchi en analysant la version numérisée du signal réfléchi, évaluer l'accès en déterminant en accord avec les paramètres caractéristiques si l'accès est normal;
l'AFE (506), apte à convertir le signal numérique reçu du processeur de signaux numériques (505) en un signal analogique et à transmettre le signal analogique à un module de commande de ligne (507) et à recevoir un signal analogique réfléchi d'un récepteur de ligne (508), convertir le signal analogique réfléchi en version numérisée et transmettre la version numérisée au processeur de signaux numériques (505);
le module de commande de ligne (507), apte à amplifier le signal analogique reçu de l'AFE (506) et à transmettre le signal analogique amplifié à une sortie de l'accès par le circuit hybride (509); et
le récepteur de ligne (508), apte à recevoir le signal analogique réfléchi de la sortie de l'accès par le circuit hybride (509) et à transmettre le signal analogique réfléchi analogique à l'AFE (506);
où le signal analogique réfléchi reçu par le récepteur de ligne (508) est une version réfléchie d'un signal aval, et le signal aval comprend des signaux dans les bandes de fréquence à la fois des canaux amont et aval de l'accès du dispositif d'accès large bande.

10. Appareil selon la revendication 9, où une impédance de sortie de l'accès est désadaptée.

11. Appareil selon la revendication 9, comprenant en outre un dispositif de calibrage qui consiste au moins en une impédance de calibrage (601) reliée à la sortie de l'accès par un relais de calibrage (602) durant le test.
